# EUROPÄISCHE PATENTSCHRIFT

(11) **EP 2 941 443 B1**
(45) Veröffentlichungstag und Bekanntmachung des Hinweises auf die Patenterteilung: **15.02.2017**
(21) Anmeldenummer: 13801988.0
(22) Anmeldetag: 04.12.2013
(51) Int. Cl.: C08F 2/42, B01J 19/00, C08F 22/02, C08F 22/10

(54) **VERFAHREN ZUR SOFORTBEENDIGUNG VON RADIKALISCHEN POLYMERISATIONEN UND INHIBITORLÖSUNG SOWIE DEREN VERWENDUNG**
METHOD FOR IMMEDIATELY TERMINATING RADICAL POLYMERIZATIONS, INHIBITOR SOLUTION, AND USE THEREOF
PROCÉDÉ D'ARRÊT IMMÉDIAT DE POLYMÉRISATIONS RADICALAIRES ET SOLUTION INHIBITRICE AINSI QUE LEUR UTILISATION

(30) Priorität: 05.01.2013 DE 102013000128
(43) Veröffentlichungstag der Anmeldung: 11.11.2015
(73) Patentinhaber: Allessa GmbH, 60386 Frankfurt am Main (DE)
(72) Erfinder: KOCH, Peter, 60318 Frankfurt (DE); KRATTENMACHER, Manfred, 61184 Karben (DE)
(74) Vertreter: Ackermann, Joachim
(86) Internationale Anmeldenummer: PCT/EP2013/003666
(87) Internationale Veröffentlichungsnummer: WO 2014/106518

(56) Entgegenhaltungen:
- EP-A1- 1 683 652
- EP-A1- 1 918 108
- EP-A2- 1 229 005
- WO-A2-02/50160

## Beschreibung

Die vorliegende Erfindung betrifft Lösungen und ein Verfahren zur sofortigen Beendigung radikalischer Polymerisationen.

Da radikalische Polymerisationen, wenn sie einmal ausgelöst sind - ob gewollt oder ungewollt - stark exotherm verlaufen, kann sich bei mangelhafter Abfuhr der Reaktionswärme durch selbständiges Aufheizen der Reaktionsmasse die Polymerisation derart beschleunigen, dass sie außer Kontrolle gerät und kritische Zustände - bis hin zu einer Explosion des Reaktionsbehälters - erreicht werden.

Erfolgt bei radikalischen Polymerisationen vorgenannte Wärmeabfuhr in mangelhafter Weise, besteht daher die Gefahr, dass die Polvmerisation so heftig verläuft, dass das das Polymerisationsgemisch enthaltende Gefäß explodiert, wenn der außer Kontrolle geratenen Polymerisation (z.B. eine radikalische Substanz-, Lösungs-, Emulsions- oder Suspensionspolymerisation von wenigstens eine ethylenisch ungesättigte Gruppe aufweisenden Verbindungen (Monomeren)) nicht entgegengetreten wird.

Ein solches wirksames Entgegentreten wird insbesondere aber auch im Fall von ungewollt ausgelösten radikalischen Polymerisationen benötigt. Ungewollt ausgelöste radikalische Polymerisationen können z.B. bei der Lagerung und/oder beim Transport von Monomere enthaltenden Substanzen auftreten, da sowohl Wärme als auch Licht oder unerwünschte Radikale eine radikalische Polymerisation von Monomeren auslösen können. Zwar versucht man solchen ungewollten radikalischen Polymerisationen üblicherweise dadurch präventiv entgegenzutreten, dass man den Monomeren geringe Mengen (in der Regel bis zu 1000 Gew.-ppm) an Inhibitoren radikalischer Polymerisationen (Radikalfänger, Polymerisationsinhibitoren) zusetzt. Deren inhibierende Wirkung darf jedoch nicht zu ausgeprägt sein, da sie sonst vor einer späteren Verwendung der Monomeren für radikalisch initiierte Polymerisationszwecke wieder abgetrennt werden müßten. Eine mäßig inhibierende Wirkung, wie sie z.B. der Monomethylether des Hydrochinons (MEHQ) aufweist, kann von radikalischen Polymerisationsinitiatoren jedoch normalerweise dominiert werden, weshalb MEHQ ein für Monomere besonders häufig angewandter Lager- und/oder Transportstabilisator ist. Die Erfahrung hat jedoch gezeigt, dass selbst bei mit Lager- und/oder Transportstabilisatoren stabilisierten Monomeren eine ungewollte radikalische Polymerisation derselben nicht völlig ausgeschlossen werden kann. Letzteres gilt insbesondere dann, wenn es sich bei den Monomeren um die radikalisch besonders polymerisationsfreudigen (Meth)acrylmonomeren und/oder Styrol handelt.

Unter dem Begriff (Meth)acrylmonomere sollen hier Substanzen verstanden werden, die aus Acrylsäure bzw. Methacrylsäure bzw. deren Abkömmlingen, beispielsweise aus Acrolein, Methacrolein, Acrylsäure, Methacrylsäure und/oder aus Estern der beiden vorgenannten Säuren bestehen. (Meth)acryl wird in dieser Beschreibung generell als verkürzte Schreibweise für Acryl und/oder Methacryl verwendet.

Vor allem Substanzen, die zu wenigstens 90 Gew.-% aus (Meth)acrylmonomeren und/oder aus Styrol besehen, sind bezüglich einer ungewollten radikalischen Polymerisation gefährdet (dies gilt auch bei präventivem Polymerisationsinhibitorzusatz). Dies trifft vor allem dann zu, wenn solche Substanzen beim Transport und/oder bei der Lagerung extremen äußeren Bedingungen ausgesetzt sind (z.B. extrem hohen Temperaturen beim Transport via Schiff über verschiedene Klimazonen hinweg (z.B. über den Äquator), wie es z.B. beim Transport von Europa nach Südostasien der Fall ist, oder extrem tiefen Temperaturen wie bei der Lagerung in außenliegenden Tanks in nordischen Ländern. Insbesondere tiefe Temperaturen sind nicht unbedenklich, können sie doch in Extremfällen zur partiellen oder vollständigen Kristallisation der Monomeren führen. Letzteres bedingt normalerweise eine Entmischung von Monomeren und Stabilisator ("kristallisative Reinigung"), was dazu führen kann, dass bei einem späteren Schmelzen für eine gewisse Zeitdauer nichtstabilisierte Bezirke von Monomeren vorliegen, von denen mit erhöhter Wahrscheinlichkeit eine ungewollte radikalische Polymerisation ausgehen kann.

Für einen sicheren Transport und/oder eine sichere Lagerung von Monomere enthaltenden Substanzen bedarf es daher eines Verfahrens, das in der Lage ist, eine ungewollt ausgelöste radikalische Polymerisation der Monomeren möglichst rasch zu beenden. Ein solches Verfahren wird aber auch benötigt, um außer Kontrolle geratene gewollte radikalische Polymerisationen unmittelbar stoppen zu können.

Ein wirksames Entgegentreten zu einer solchen unkontrollierbar gewordenen radikalischen Polymerisation ist bereits in der Literatur beschrieben (siehe z. B. Process Safety Progress 1993 (Vol. 12. Nr. 2), S. 111-114, WO 99/21893 A2 und DE 199 18 970 A1).

Zu diesem Zweck werden Lösungen von bekannten Inhibitoren der radikalischen Polymerisation [z.B. Phenothiazin oder Hydrochinonmonomethylether (MEHQ)] eingesetzt.

Während der Zeitschriftenartikel in Process Safety Progress keine Hinweise auf mögliche Lösungsmittel gibt, wird in den beiden oben genannten Patentdokumenten die Verwendung von N-Methylpyrrolidon und / oder von N-Ethylpyrrolidon beschrieben.

Die genannten N-Alkylpyrrolidone sind gute Lösungsmittel für Phenothiazin und / oder für MEHQ und deren Lösungen sind bei tiefen Temperaturen bis zu -11 °C stabil. Zudem wird ihre Wassermischbarkeit als Vorteil gesehen, da sie in dieser Form auch bei wässrig basierten Systemen anwendbar sind.

Allerdings sind die Alkylpyrrolidone wegen ihrer fruchtschädigenden Wirkung bzw. ihrer Gesundheitsschädlichkeit beim Verschlucken kennzeichungspflichtig. Daher besteht ein starkes Interesse an alternativen Formulierungen der Inhibitoren mit (wassermischbaren) organischen Lösungsmitteln, die toxikologisch unbedenklicher und idealerweise nicht kennzeichnungspflichtig sind. Die oben zitierte Literatur gibt keine Hinweise auf solche Lösungsmittel.

In eigenen Versuchen wurde festgestellt, dass Phenothiazin in den gebräuchlichen organischen Lösungsmitteln nur schwer löslich ist (z. B. beträgt die Löslichkeit in Methanol, Ethanol, Isopropanol, Toluol, Cyclohexan oder n-Hexan weniger als 2-3 Gewichtsprozente). Lediglich im bereits erwähnten N-Methylpyrrolidon und im chemisch und toxikologisch verwandten Dimethylformamid konnten konzentrierte Lösungen von 30 Gewichtsprozenten oder darüber hergestellt werden.

Auch Tetrahydrofuran und Aceton konnten als gute Lösungsmittel identifiziert werden. Leider haben diese Lösungsmittel niedrige Siede- und Flammpunkte, was Transport, Lagerung und Handhabbarkeit der Lösungen erschwert.

In EP1229005 wird eine Lagerungs- und Transportmethode von Alkoxy(poly)-alkylenglokol enthaltenden Materialien offenbart. EP1918108 offenbaren flüssige Zusammensetzungen enthaltend neben einem Tensid auch einen Inhibitor für radikalische Polymerisationen zur Verhinderung unerwünschter Vernetzungsreaktionen. In EP1683652 wird unter anderem ein Polymerisatonsverfahren beschriebenbei dem Ethyleneglykol als Lösungsmittel eingesetzt werden kann. In WO02/50160 wird ein Verfahren zur Herstellung von Alkylpolyalkylenglykolester monoethylenisch ungesättigter Carbonsäuren, wobei die Veresterung unter anderem in Gegenwart von Phenothiazin erfolgen kann.

Aufgabe der vorliegenden Erfindung war es daher, ein Verfahren zur sofortigen Beendigung radikalischer Polymerisationen in möglichst vorteilhafter und möglichst breit anwendbarer Weise zur Verfügung zu stellen.

Demgemäß wurde ein Verfahren zur Sofortbeendigung von radikalischen Polymerisationen durch Zusatz einer Phenothiazinverbindung und/oder eines Monoalkylethers des Hydrochinons enthaltenden Inhibitorlösung zum radikalisch polymerisierenden System gefunden, das dadurch gekennzeichnet ist, daß das Lösungsmittel der Inhibitorlösung zu wenigstens 50 % seines Gewichtes an endständig veretherten Derivaten von Alkylenglykol und/oder von Polyalkylenglykyol enthält.

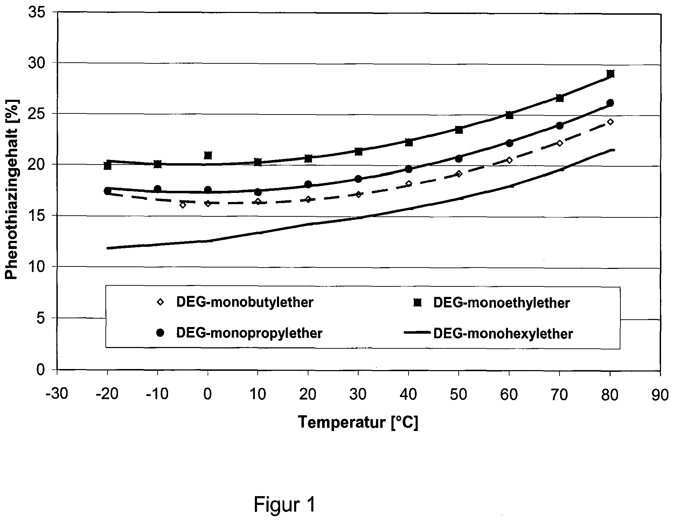

Es wurde überraschend gefunden, dass die Inhibitoren Phenothiazin und Monoalkylether des Hydrochinons, insbesondere Phenothiazin und / oder MEHQ, in (Poly)alkylenglykol(en) gut löslich sind und stabile Lösungen bei Temperaturen bis beispielsweise hinab zu -25°C bilden. Besonders überraschend ist dabei die Tatsache, dass die Löslichkeit von Phenothiazin in (Poly)alkylenglykolen im Bereich zwischen -20°C und +20°C nahezu unabhängig von der Temperatur ist, so dass durch Temperaturschwankungen keine Bildung von Feststoff in den Lösungen zu befürchten ist (siehe Figur 1).

Bei den erfindungsgemäß eingesetzten Inhibitoren handelt es sich beispielsweise um unsubstituiertes Phenothiazin sowie um unsubstituiertes Phenothiazin-5-oxid oder ein Hydrohalogenid dieser Verbindungen. Die 5-Position im Phenothiazinsystem ist die Position des Ringschwefelatoms. Diese Verbindungen werden in dieser Beschreibung als Phenothiazinverbindungen bezeichnet.

Neben dem unsubstituierten Phenothiazin, dessen 5-Oxid oder dessen Hydrohalogenid können auch substituierte Derivate dieser Verbindungen eingesetzt werden. Jede Position im Ring, an der eine Substitution möglich ist, kann substituiert sein und es können ein oder mehrere Substitutenten anwesend sein.

Typische Substituenten sind Alkylgruppen, Alkoxygruppen, Arylgruppen, Aroylgruppen, Carboxylgruppen, Carbonsäureestergruppen, Carbonsäureamidgruppen, Halogenatome, Hydroxylgruppen, Nitrogruppen oder eine Kombination von zwei oder mehreren dieser Gruppen.

Bevorzugte Phenothiazinverbindungen werden ausgewählt aus der Gruppe des Phenothiazins, der alkylsubstituierten Phenothiazine, der arylsubstituierten Phenothiazine, der aroylsubstituierten Phenothiazine, der carboxylsubstituierten Phenothiazine, der halogensubstituierten Phenothiazine, der N-(Dialkylaminoalkyl)-substituierten Phenothiazine, des Phenothiazin-5-oxids, der alkylsubstituierten Phenothiazin-5-oxide, der arylsubstituierten Phenothiazin-5-oxide, der aroylsubstituierten Phenothiazin-5-oxide, der carboxylsubstituierten Phenothiazin-5-oxide, der halogensubstituierten Phenothiazin-5-oxide, der N-(Dialkylaminoalkyl)-substituierten Phenothiazin-5-oxide und der Hydrochloride dieser Verbindungen.

Besonders bevorzugte Phenothiazinverbindungen werden ausgewählt aus der Gruppe bestehend aus Phenothiazin, 3-Phenylphenothiazin, N-Phenylphenothiazin, Phenothiazin-5-oxid, N-Benzoylphenothiazin, 7-Benzoylphenothiazin, 3,7-Difluorophenothiazin, N-Ethylphenothiazin, 2-Acetyl-phenothiazin, 3,7-Dioctylphenothiazin, N-Methylphenothiazin-5-oxid, N-Acetylphenothiazin, N-(2-Diethylaminoethyl)-phenothiazin, N-(2-Dimethylamino-propyl)-phenothiazin, N-(2-Dimethylaminopropylphenothiazin)-hydrochlorid, N-Octadecylphenothiazin und N-Propylphenothiazin.

Bei den erfindungsgemäß eingesetzten Inhibitoren kann es sich auch um Monoalkylether des Hydrochinons handeln. Dabei handelt es sich insbesondere um Monoether des Hydrochinons mit aliphatischen Alkoholen mit ein bis sechs Kohlenstoffatomen. Besonders bevorzugt wird der Monomethylether des Hydrochinons eingesetzt.

Neben den Phenothiazinverbindungen und/oder den Hydrochinonmonoalkylethern kann die erfindungsgemäß zuzusetzende Inhibitorlösung auch noch andere

Polymerisationsinhibitoren enthalten. Als solche seien beispielhaft aufgeführt Hydrochinon, Diphenylamin, p-Phenylendiamine, Nitroxyl-Radikale aufweisende Verbindungen, eine Nitroso-Gruppe aufweisende Verbindungen, und Hydroxylamine. Beispiele für solche Inhibitoren finden sich in WO 99/21893 A2.

Bei den erfindungsgemäß eingesetzten Lösungsmitteln handelt es sich in der Regel um Alkylenglykole und/oder um von Alkylenglykolen abgeleitete Polyalkylenglykole, die endständig verethert sind. Diese Verbindungen werden in dieser Beschreibung zusammenfassend als endständig veretherte Deriate von (Poly)alkylenglykol bezeichnet.

Beispiele für Alkylenglykole sind Ethylenglykol, Propylenglykol, Butylenglykol oder Hexamethylenglykol. Beispiele für Polyalkylenglykole sind Polyethylenglykol, Polypropylenglykol oder Polybutylenglykol oder deren gemischte Derivate, wie Polyethylenpolypropylenglykole.

Beispiele für endständig veretherte Derivate von (Poly)alkylenglykolen sind Verbindungen, bei denen die Hydroxyl-Endgruppen ganz oder teilweise mit Alkylgruppen verethert sind.

Bevorzugt erfindungsgemäß eingesetzte Lösungsmittel sind Verbindungen der Formel I 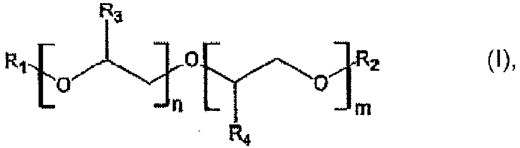 worin n und m unabhängig voneinander für 0 -10 stehen, wobei n + m ≥ 1 ist,

R₁ sowie R₂ unabhängig voneinander für Wasserstoff oder lineares oder verzweigtes C₁ bis C₆ Alkyl stehen, wobei mindestens einer der Reste R₁ und R₂ lineares oder verzweigtes C₁-C₆ Alkyl ist, und

R₃ und R₄ unabhängig voneinander für Wasserstoff oder Methyl stehen.

Beispiele für erfindungsgemäß bevorzugt eingesetzte Glykolether der allgemeinen Formel sind Ethylenglykolbutylether [111-76-2], Ethylenglykolmonomethylether [109-86-4], Ethylenglykolmonoethylether [110-80-5], Ethylenglykoldimethylether [110-71-4], Ethylenglykoldiethylether [629-14-1], 1-Methoxy-2-propanol [107-98-2], Diethylenglykolmonoethylether [111-90-0], Diethylenglykoldimethylether [111-96-6] Diethylenglykoldiethylether [112-36-7], Diethylenglykolmonobutylether [112-34-5], Diethylenglykoldibutylether [112-73-3], Diethylenglykolmonopropylether [6881-94-3], Diethylenglykolmonohexylether [112-59-4], Dipropylenglykolmonomethylether [34590-94-8], Dipropylenglykolmonobutylether [29911-28-2], Dipropylenglykolmonotert.-butylether [132739-31-2], Dipropylenglykolmonopropylether [29911-27-1], Triethylenglykoldimethylether [112-49-2], Triethylenglykolmonoethylether [112-50-5], Tripropylenglykolmonobutylether [55934-93-5], Tripropylenglykolmonomethylether [25498-49-1] und/oder Tripropylenglykolmonopropylether [96077-04-2].

Die Glykolether können jeweils in reiner Form als Lösemittel dienen, oder es können Gemische der Glykolether eingesetzt werden.

Bevorzugte Glykolether der allgemeinten Formel (I) sind Diethylenglykolmonoethylether, Diethylenglykolmonobutylether, Diethylenglykoldibutylether, Dipropylenglykolmono-tert.-butylether, Triethylenglykolmonoethylether und/oder Tripropylenglykolmonobutylether.

Besonders bevorzugte Glykolether der allgemeinen Formell (I) sind Diethylenglykolmonoethylether und Diethylenglykolmonobutylether. Diethylenglykolmonoethylether ist nicht kennzeichnungspflichtig und wassermischbar. Diethylenglykolmonobutylether ist ebenfalls wassermischbar und lediglich wegen seiner augenreizenden Eigenschaften zu kennzeichnen.

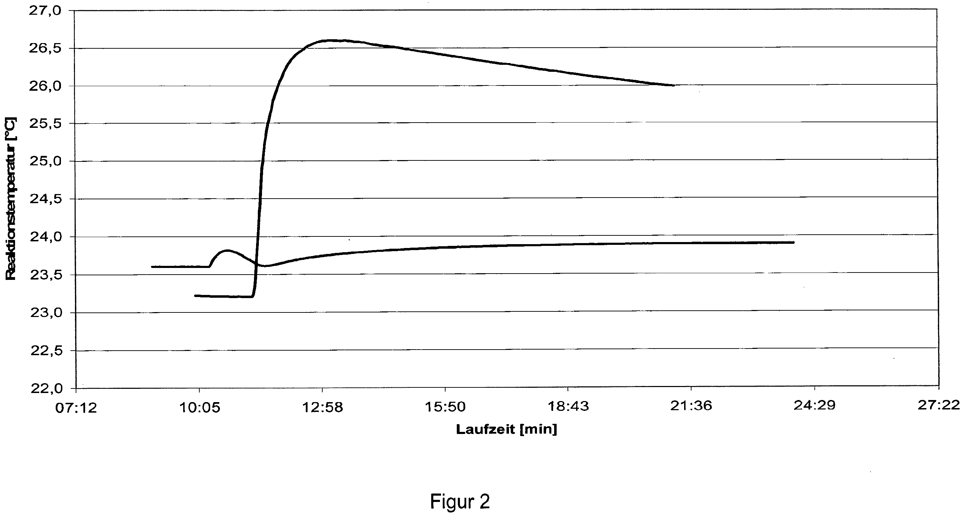

Die Vorteilhaftigkeit des erfindungsgemäßen Verfahrens stellt sich wie folgt dar:
- gegenüber der Empfehlung in Res. Discl. 1989, 300, 245 (Eng.), zur Sofortbeendigung einer ungewollten radikalischen Polymerisation von Acrylsäure eine wäßrige Cu(II)-Salz-Lösung zuzusetzen, sind Inhibitorlösungen auf der Grundlage von endständig veretherten (Poly)alkylenglykol-Derivaten in der Regel einerseits sowohl mit wäßrigen als auch mit nichtwäßrigen Systemen mischbar und andererseits im Nachhinein von solchen Systemen auch wieder leicht abtrennbar;
- in Process Saf. Prog. (1993), 12(2), 111-4, wird zwar empfohlen, zur Sofortbeendigung einer ungewollten radikalischen Polymerisation von Acrylsäure selbiger eine Inhibitorlösung auf der Grundlage von Phenothiazin zuzusetzen, doch enthält dieser Stand der Technik keinen Hinweis darauf, das Phenothiazin in einem hauptsächlich aus endständig veretherten (Poly)alkylenglykol-Derivaten bestehenden Lösungsmittel gelöst befindlich zuzusetzen.
- Endständig veretherte (Poly)alkylenglykol-Derivate haben im Gegensatz zu den in WO 99/21893 A2 und DE 199 18 970 A1 beschriebenen N-Alkylpyrrolidonen keinen schwach basischen Charakter. Während bei Zugabe einer Inhibitorlösung in N-Alkylpyrrolidonen zu einem sauren Acrylmonomer (z. B. Acrylsäure) eine Wärmetönung auftritt, ist dies bei Inhibitorlösungen in (Poly)alkylenglykolen nicht der Fall (siehe Figur 2; hier wurden unter adiabaten Bedingungen zu vorgelegter Acrylsäure 20 Gew.-% einer 15%igen Inhibitorlösung in N-Alkylpyrrolidon bzw. in Diethylenglykolmonobutylether zugegeben und die auftretende Wärmetönung gemessen). Diese unerwünschte Wärmetönung, die eine beginnende Polymerisation sogar noch beschleunigen könnte, ist wahrscheinlich auf eine Säure-Base-Reaktion zwischen Acrylsäure und dem N-Alkylpyrrolidon zurückzuführen. Bei Verwendung der erfindungsgemäßen Inhibitorlösung in den endständig veretherten (Poly)alkylenglykol-Derivaten ist eine solche Wärmetönung nicht zu beobachten, was die Sicherheit ihrer Anwendung gegenüber dem Stand der Technik erhöht.

Weitere Vorteile der erfindungsgemäßen Verfahrensweise bestehen darin, daß sich die (Poly)alkylenglykol-Derivate gegenüber den meisten Substanzen inert verhalten. Ferner liegt der Siedepunkt von vielen der endständig veretherten (Poly)alkylenglykol-Derivaten oberhalb des Siedepunktes vieler Monomerer, was eine nachträgliche Trennung von den Monomeren erleichtert und eine spätere Weiterverwendung des Monomeren ermöglicht. Für den Fall, dass das Monomere Ethylhexylacrylat ist (Siedepunkt 215-219°C), kann vorteilhaft eine erfindungsgemäße Inhibitorlösung in Diethylenglykolmonohexylether (Siedepunkt 258°C) oder Diethylenglykoldibutylether (Siedepunkt 252°C) eingesetzt werden, weil nach erfolgtem Abstoppen einer Polymerisation das Monomere durch Destillation als erste Fraktion regenerierbar ist. Bei Einsatz einer Inhibitorlösung gemäß Stand der Technik in N-Methylpyrrolidon (Siedepunkt 204°C) ist die Regenerierung von Ethylhexylacrylat erst möglich, wenn zuvor das N-Methylpyrrolidon abdestilliert wird.

Weiterhin verhindert der hohe Siedepunkt von (Poly)alkylenglykolen die Ausbildung explosiver Dampf-/Sauerstoffgemische, beispielsweise in heißen Klimazonen. Auch weisen (Poly)alkylenglykole in der Regel einen tief liegenden Schmelzpunkt auf, was auch in kühleren Umgebungen, beispielsweise in nordischen Ländern ihre Anwendung ermöglicht. Zusätzlich von Vorteil ist der hohe Flammpunkt von (Poly)alkylenglykolen sowie ihre toxikologische Unbedenktlichkeit.

Ganz besonders vorteilhaft für das erfindungsgemäße Verfahren ist jedoch, dass Phenothiazin und/oder Monoalkylether des Hydrochinons bei Normaltemperatur (25°C) in (Poly)alkylenglykolen eine erhöhte Löslichkeit aufweisen, die auch beim Abkühlen auf -20°C nicht signifikant abnimmt.

Dieses ermöglicht die erfindungsgemäße Anwendung von Lösungen mit erhöhtem Gehalt an Phenothiazin und/oder an Monoalkylether des Hydrochinons ohne das Risiko, daß mit einer Änderung der Außentemperatur unmittelbar eine partielle oder vollständige Ausfällung des Inhibitors aus der Lösung einhergeht.

Weiterhin vorteilhaft ist die geringe Viskosität der Inhibitorlösung, die auch bei niedrigen Temperaturen eine einfache Dosierung erlaubt.

Eine Zugabe von Inhibitoren in Substanz zur Sofortbeendigung von radikalischen Polymerisationen ist insofern von Nachteil, als der in Substanz gegebene geringe Zerteilungsgrad des Inhibitors der angestrebten Sofortbeendigung nicht angemessen ist.

Neben den endständig veretherten (Poly)alkylenglykol-Derivaten kann die erfindungsgemäß zuzusetzende Inhibitorlösung auch noch andere Lösungsmittel enthalten. Als solche kommen alle diejenigen in Betracht, die mit den veretherten (Poly)alkylenglykol-Derivaten mischbar sind. Beispielhaft genannt seien als solche Lösungsmittel Butylacetat, Methylisobutylketon, Toluol, Xylol, Chlorbenzol oder o-Dichlorbenzol.

Bevorzugt besteht das Lösungsmittel der erfindungsgemäß zuzusetzenden Inhibitorlösung zu wenigstens 75 % seines Gewichtes, besonders bevorzugt zu wenigstens 85 % seines Gewichtes und ganz besonders bevorzugt zu wenigstens 95 % seines Gewichtes aus endständig veretherten (Poly)alkylenglykol-Derivaten. Erfindungsgemäß zweckmäßig besteht das Lösungsmittel der Inhibitorlösung ausschließlich aus solchen (Poly)alkylenglykol-Derivaten.

In der Regel wird der Gehalt an Inhibitor in den erfindungsgemäß zuzusetzenden Inhibitorlösungen, bezogen auf die Lösung, wenigstens 5 Gew.-%, vorzugsweise wenigstens 15 Gew.-%, betragen. Mit besonderem Vorteil ist neben der Phenothiazinverbindung und/oder dem Hydrochinonmonoalkylether kein weiterer Polymerisationsinhibitor in der erfindungsgemäß zuzusetzenden Inhibitorlösung enthalten.

Mit Vorteil wird erfindungsgemäß eine Lösung von Phenothiazin in (Poly)alkylenglykol bevorzugt, deren Gehalt an Phenothiazin zweckmäßigerweise, auf die Lösung bezogen, wenigstens 5 Gew. %, vorzugsweise wenigstens 15 Gew.-% beträgt.

Das erfindungsgemäße Verfahren eignet sich zur Sofortbeendigung jedweder Art radikalischer Polymerisationen, insbesondere derjenigen ungewollten und/oder außer Kontrolle geratenen radikalischen Polymerisationen, die eingangs dieser Schrift genannt wurden.

Zu diesen sind vor allem die ungewollten radikalischen Polymerisationen von solchen Substanzen zu zählen, die zu wenigstens 95 Gew.-% oder zu wenigstens 98 Gew.-% oder zu wenigstens 99 Gew.-% oder zu 100 Gew.-% aus (Meth)acrylmonomeren bestehen. Als (Meth)acrylmonomere kommen dabei vor allem (Meth)acrylsäure und Ester aus (Meth)acrylsäure und ein- oder mehrwertigen Alkanolen in Betracht. Dies gilt insbesondere dann, wenn die ein- oder mehrwertigen Alkanole ein bis zwanzig C-Atome, oder ein bis zwölf C-Atome oder ein bis acht C-Atome aufweisen.

Beispielhafte Vertreter solcher Ester sind z.B. Methylacrylat, Ethylacrylat, n-Butylacrylat, iso-Butylacrylat, tert.-Butylacrylat, 2-Ethylhexylacrylat, Methylmethacrylat, Ethylmethacrylat, n-Butylmethacrylat und tert.-Butylmethacrylat.

In anwendungstechnisch zweckmäßiger Weise kann das Einbringen der erfindungsgemäß zuzusetzenden Inhibitorlösung über eine Sprühdüse vorgenommen werden, um eine möglichst rasche homogene Verteilung im radikalisch polymerisierenden System zu erzielen. Selbstverständlich kann vorgenannte Homogenisierung auch durch Umpumpen und/oder Rühren unterstützt werden. Allerdings bedingen solche mechanischen Hilfsmaßnahmen auch die Gefahr einer Polymerisationsbeschleunigung, da mit ihnen gleichzeitig ein Energieeintrag in das radikalisch polymerisierende System verknüpft ist. Die einzubringende Inhibitorlösung ist zweckmäßig in einem geeigneten Vorratsbehälter enthalten.

Wird das erfindungsgemäße Verfahren zur Sofortbeendigung der radikalischen Polymerisation von ungewollt in Substanz polymerisierenden (Meth)acrylmonomeren angewendet, sollte die insgesamt zugesetzte Menge an Inhibitor, vorzugsweise an Phenothiazin, bezogen auf die (Meth)acrylmonomeren, etwa 0,01 bis 3 Gew.-% betragen. In der Regel genügt eine zugesetzte Menge an Inhibitor von 0,01 bis 0,05, häufig 0,025 Gew.-%.

Die Wirksamkeit der (Poly)alkylenglykollösungen lässt sich ebenso wie in den Beispielen der WO 99/21893 A2 beschrieben überprüfen.

Die folgenden Beispiele und Figuren erläutern die Erfindung ohne diese zu begrenzen.

Es zeigen:
Figur 1 die Löslichkeit von Phenothiazin in ausgewählten Diethylenglykolethern aus der Gruppe der (Poly)alkylenglykole.
Figur 2 den Temperaturverlauf beim adiabaten Mischen von Acrylsäure mit 20 Gew.-% einer 15%igen Phenothiazin-Lösung in N-Methylpyrrolidon (Stand der Technik, obere Kurve) bzw. in Diethylenglykolmonobutylether (erfindungsgemäß, untere Kurve).
Figur 3 die Temperaturabhängigkeit der Viskosität von erfindungsgemäß eingesetzten Lösungen von Phenothiazin in (Poly)alkylenglykolen

### Beispiele 1 bis 4:

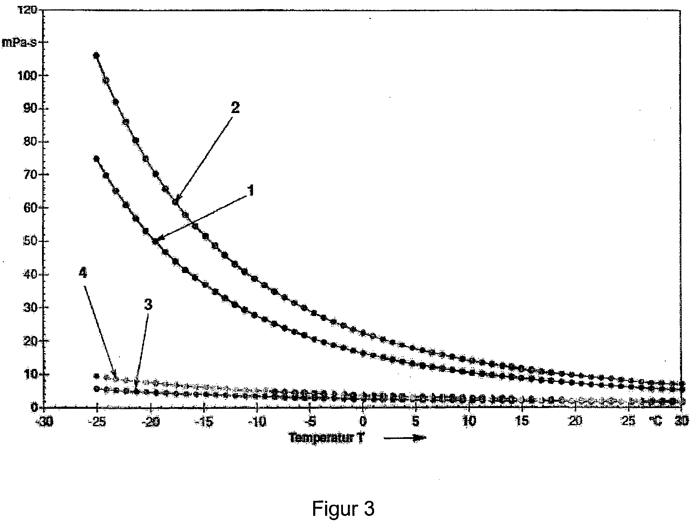

15 g Phenothiazin wurden in 85 g Glykolether bei Raumtemperatur oder unter leichtem Erwärmen gelöst. Die Viskosität dieser Lösungen in Abhängigkeit von der Temperatur ist in Figur 3 dargestellt.
Beispiel 1: Diethylenglykolmonoethylether
Beispiel 2: Diethylenglykolmonobutylether
Beispiel 3: Diethylenglykoldimethylether
Beispiel 4: Diethylenglykoldibutylether

Die resultierenden Lösungen zeigen beim Abkühlen auf -25°C keinerlei Kristallisation, und die Viskosität stieg je nach Lösemittel auf maximal 106 mPas an. Die Viskosität wurde mit einem Rheometer MCR 101 von Anton Paar bestimmt (Kegel-Platte-System). Die Scherrate betrug 10 sec⁻¹.

In der Figur 3 ist die Viskosität in mPas der vier Lösungen nach Beispielen 1-4 als Funktion der Temperatur bei Temperaturen zwischen -25°C und +30°C dargestellt. Die mit 1 bezeichnete Kurve beschreibt den Temperaturverlauf der Viskosität der Lösung nach Beispiel 1. Die mit 2, 3 und 4 bezeichneten Kurven beschreiben den Temperaturverlauf der Viskosität der Lösungen nach Beispielen 2,3 und 4.

Beispiel 5 (Mischungsversuche von Acrylsäure mit erfindungsgemäßer Inhibitorlösung bzw. mit Inhibitorlösung gemäß Stand der Technik):
In einem 100 ml-Reaktor (EASY-MAX der Fa. Mettler-Toledo) mit Magnetrührer wurden 50 g Acrylsäure bei Raumtemperatur vorgelegt und unter Rühren (∼ 200 U/min) auf Ist-Temperatur der Inhibitorlösung temperiert und dann unter adiabatischen Bedingungen 10 g Inhibitorlösung 15 %ig in vier Sekunden (∼ 150 ml/min) mit der Dosiereinheit unter die Oberfläche in den Reaktor dosiert und ca. 10 Minuten nachgerührt. Der Verlauf der Innentemperatur bei Verwendung von erfindungsgemäßer Inhibitorlösung (in Diethylenglykolmonobutylether) im Vergleich mit Inhibitorlösung gemäß Stand der Technik (in N-Methylpyrrolidon) zeigt Figur 2. Im Falle der Inhibitorlösung gemäß Stand der Technik ist eine Exothermie erkennbar, bei Einsatz erfindungsgemäßer Inhibitorlösung nicht.

Vergleichbare Phänomene sind auch beim Mischen von Inhibitorlösungen mit Methacrylsäure oder Acrylnitril erkennbar.

## Patentansprüche

1. Verfahren zur Sofortbeendigung von radikalischen Polymerisationen durch Zusatz einer Phenothiazinverbindung und/oder eines Monoalkylethers des Hydrochinons enthaltenden Inhibitorlösung zum radikalisch polymerisierenden System, **dadurch gekennzeichnet, dass** das Lösungsmittel der Inhibitorlösung zu wenigstens 50 % seines Gewichtes an endständig veretherten Derivaten von Alkylenglykol und/oder von Polyalkylenglykyol enthält.

2. Verfahren nach Anspruch 1, **dadurch gekennzeichnet, dass** die Phenothiazinverbindung ausgewählt wird aus der Gruppe bestehend aus Phenothiazin, 3-Phenylphenothiazin, N-Phenylphenothiazin, Phenothiazin-5-oxid, N-Benzoylphenothiazin, 7-Benzoylpheno-thiazin, 3,7-Difluorophenathiazin, N-Ethylphenothiazin, 2-Acetyl-phenothiazin, 3,7-Dioctylphenothiazin, N-Methylphenothiazin-5-oxid, N-Acetylphenothiazin, N-(2-Diethylaminoethyl)-phenothiazin, N-(2-Dimethylamino-propyl)-phenothiazin, N-(2-Dimethylaminopropylphenothiazin)-hydrochlorid, N-octadecylphenothiazin und N-Propylphenothiazin.

3. Verfahren nach Anspruch 1, **dadurch gekennzeichnet, dass** der Monoalkylether des Hydrochinons ein Monoether des Hydrochinons mit aliphatischen Alkoholen mit ein bis sechs Kohlenstoffatomen ist, besonders bevorzugt der Monomethylether des Hydrochinons.

4. Verfahren nach Anspruch 1, **dadurch gekennzeichnet, dass** endständig veretherte Derivate von Alkylenglykol und/oder Polyalkylenglykol Verbindungen der Formel I sind 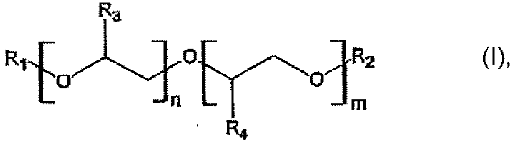
worin n und m unabhängig voneinander für 0 -10 stehen, wobei n + m ≥ 1 ist,
R₁ sowie R₂ unabhängig voneinander für Wasserstoff oder lineares oder verzweigtes C₁ bis C₆ Alkyl stehen, wobei mindestens einer der Reste R₁ und
R₂ lineares oder verzweigtes C₁-C₆ Alkyl ist, und
R₃ und R₄ unabhängig voneinander für Wasserstoff oder Methyl stehen.

5. Verfahren nach Anspruch 4, **dadurch gekennzeichnet, dass** die Verbindungen der Formel I ausgewählt werden aus der Gruppe Ethylenglykolbutylether, Ethylenglykolmonomethylether, Ethylenglykolmonoethylether, Ethylenglykoldimethylether, Ethylenglykoldiethylether 1-Methoxy-2-propanol, Diethylenglykolmonoethylether, Diethylenglykoldimethylether, Diethylenglykoldiethylether, Diethylenglykolmonobutylether, Diethylenglykoldibutylether, Diethylenglykolmonopropylether, Diethylenglykolmonohexylether, Dipropylenglykolmonomethylether, Dipropylenglykolmonobutylether, Dipropylenglykolmono-tert.-butylether, Dipropylenglykolmonopropylether, Triethylenglykoldimethylether, Triethylenglykolmonoethylether, Tripropylenglykolmonobutylether, Tripropylanglykolmonomethylether und/oder Tripropylenglykolmonopropylether.

6. Verfahren nach Anspruch 5, **dadurch gekennzeichnet, dass** die Verbindungen der Formel I ausgewählt werden aus der Gruppe Diethylenglykolmonoethylether, Diethylenglykolmonobutylether, Diethylenglykoldibutylether, Dipropylenglykolmono-tert.-butylether, Triethylenglykolmonoethylether und/oder Tripropylenglykolmonobutylether, insbesondere aus der Gruppe der Diethylenglykolmonoethylether und/oder Diethylenglykolmonobutylether.

7. Verfahren nach Anspruch 1, **dadurch gekennzeichnet, dass** der Inhibitorgehalt der Inhibitorlösung, bezogen auf das Gewicht der Inhibitorlösung, wenigstens 5 Gew.-% beträgt.

8. Verfahren nach Anspruch 1, **dadurch gekennzeichnet, dass** es sich bei dem radikalisch polymerisierenden System um in Substanz radikalisch polymerisierende (Meth)acrylmonomere handelt.

9. Verfahren nach Anspruch 8, **dadurch gekennzeichnet, dass** das (Meth)acrylmonomere (Meth)acrylsäure und/oder ein (Meth)acrylsäureester ist.

10. Inhibitorlösung enthaltend, bezogen auf die Lösung, mindestens 15 Gew.-% einer Phenothiazinverbindung und/oder eines Monoalkylethers des Hydrochinons und ein Lösungsmittel, wobei das Lösungsmittel der Inhibitorlösung wenigstens 50 % seines Gewichtes an endständig verethertem Derivat von Polyalkylenglykyol enthält, dass ausgewählt ist aus der Gruppe Diethylenglykolmonoethylether, Diethylenglykolmonobutylether, Diethylenglykoldibutylether, Dipropylen-glykolmono-tert.-butylether, Triethylenglykolmonoethylether und/oder Tripropylenglykolmonobutylether.

11. Inhibitorlösung nach Anspruch 10 enthaltend Phenothiazin und Diethylenglykolmonoethylether und/oder Diethylenglykolmonobutylether.

12. Inhibitorlösung nach einem der Ansprüche 10 oder 11, **dadurch gekennzeichnet, dass** beim Mischen der Inhibitorlösung mit Acrylmonomeren keine ausgeprägte Mischungsenthalpie auftritt.

13. Verwendung der Inhibitorlösung enthaltend eine Phenothiazinverbindung und/oder einen Monoalkylether des Hydrochinons, wobei das Lösungsmittel der Inhibitorlösung wenigstens 50 % seines Gewichtes ein endständig verethertes Derivat von Alkylenglykol und/oder von Polyalkylenglykyol ist, zur Sofortbeendigung von radikalischen Polymerisationen.

## Claims

1. Method for immediately terminating free radical polymerizations by adding an inhibitor solution comprising a phenothiazine compound and/or a monoalkyl ether of hydroquinone to the free radical polymerizing system, **characterized in that** the solvent of the inhibitor solution comprises at least 50% by weight of said solvent of terminally etherified derivatives of alkylene glycol and/or of polyalkylene glycol.

2. Method according to Claim 1, **characterized in that** the phenothiazine compound is selected from the group consisting of phenothiazine, 3-phenylphenothiazine, N-phenylphenothiazine, phenothiazine-5-oxide, N-benzoylphenothiazine, 7-benzoylphenothiazine, 3,7-difluorophenothiazine, N-ethylphenothiazine, 2-acetylphenothiazine, 3,7-dioctylphenothiazine, N-methylphenothiazine-5-oxide, N-acetylphenothiazine, N-(2-diethylaminoethyl)phenothiazine, N-(2-dimethylaminopropyl)phenothiazine, N-(2-dimethylaminopropylphenothiazine) hydrochloride, N-octadecylphenothiazine and N-propylphenothiazine.

3. Method according to Claim 1, **characterized in that** the monoalkyl ether of hydroquinone is a hydroquinone monoether with aliphatic alcohols having one to six carbon atoms, particularly preferably the monomethyl ether of hydroquinone.

4. Method according to Claim 1, **characterized in that** the terminally etherified derivatives of alkylene glycol and/or polyalkylene glycol are compounds of the formula I 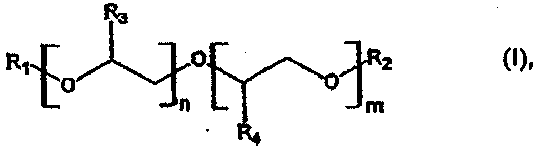
where n and m are mutually independently 0 - 10, wherein n + m is ≥ 1,
R₁ and R₂ are mutually independently hydrogen or linear or branched C₁ to C₆ alkyl, wherein at least one of the residues R₁ and R₂ is a linear or branched C₁ to C₆ alkyl, and
R₃ and R₄ are mutually independently hydrogen or methyl.

5. Method according to Claim 4, **characterized in that** the compounds of the formula I are selected from the group of ethylene glycol butyl ether, ethylene glycol monomethyl ether, ethylene glycol monoethyl ether, ethylene glycol dimethyl ether, ethylene glycol diethyl ether, 1-methoxy-2-propanol, diethylene glycol monoethyl ether, diethylene glycol dimethyl ether, diethylene glycol diethyl ether, diethylene glycol monobutyl ether, diethylene glycol dibutyl ether, diethylene glycol monopropyl ether, diethylene glycol monohexyl ether, dipropylene glycol monomethyl ether, dipropylene glycol monobutyl ether, dipropylene glycol mono-tert- butyl ether, dipropylene glycol monopropyl ether, triethylene glycol dimethyl ether, triethylene glycol monoethyl ether, tripropylene glycol monobutyl ether, tripropylene glycol monomethyl ether and/or tripropylene glycol monopropyl ether.

6. Method according to Claim 5, **characterized in that** the compounds of the formula I are selected from the group of diethylene glycol monoethyl ether, diethylene glycol monobutyl ether, diethylene glycol dibutyl ether, dipropylene glycol mono-tert-butyl ether, triethylene glycol monoethyl ether and/or tripropylene glycol monobutyl ether, particularly from the group of diethylene glycol monoethyl ether and/or diethylene glycol monobutyl ether.

7. Method according to Claim 1, **characterized in that** the inhibitor content of the inhibitor solution is at least 5% by weight, based on the weight of the inhibitor solution.

8. Method according to Claim 1, **characterized in that** the free radical polymerizing system is as such free radical polymerizing (meth)acrylic monomers.

9. Method according to Claim 8, **characterized in that** the (meth)acrylic monomer is (meth)acrylic acid and/or a (meth)acrylic ester.

10. Inhibitor solution comprising at least 15% by weight, based on the solution, of a phenothiazine compound and/or a monoalkyl ether of hydroquinone and a solvent, wherein the solvent of the inhibitor solution comprises at least 50% by weight of said solvent of a terminally etherified derivative of polyalkylene glycol selected from the group of diethylene glycol monoethyl ether, diethylene glycol monobutyl ether, diethylene glycol dibutyl ether, dipropylene glycol mono-tert-butyl ether, triethylene glycol monoethyl ether and/or tripropylene glycol monobutyl ether.

11. Inhibitor solution according to Claim 10 comprising phenothiazine and diethylene glycol monoethyl ether and/or diethylene glycol monobutyl ether.

12. Inhibitor solution according to either of Claims 10 or 11, **characterized in that** during the mixing of the inhibitor solution with acrylic monomers no pronounced enthalpy of mixing occurs.

13. Use of the inhibitor solution comprising a phenothiazine compound and/or a monoalkyl ether of hydroquinone, wherein the solvent of the inhibitor solution is at least 50% by weight of said solvent of a terminally etherified derivative of alkylene glycol and/or of polyalkylene glycol, for immediately terminating free radical polymerizations.

## Revendications

1. Procédé pour l'arrêt immédiat de polymérisations par voie radicalaire par addition d'une solution d'inhibiteur contenant un composé de phénothiazine et/ou un monoalkyléther de l'hydroquinone au système qui polymérise par voie radicalaire, **caractérisé en ce que** le solvant de la solution d'inhibiteur contient, à raison d'au moins 50% de son poids, des dérivés éthérifiés en position terminale d'alkylèneglycol et/ou de polyalkylèneglycol.

2. Procédé selon la revendication 1, **caractérisé en ce que** le composé de phénothiazine est choisi dans le groupe constitué par la phénothiazine, la 3-phénylphénothiazine, la N-phénylphénothiazine, le 5-oxyde de phénothiazine, la N-benzoylphénothiazine, la 7-benzoylphénothiazine, la 3,7-difluorophénothiazine, la N-éthylphénothiazine, la 2-acétylphénothiazine, la 3,7-dioctylphénothiazine, le 5-oxyde de N-méthylphénothiazine, la N-acétylphénothiazine, la N-(2-diéthylaminoéthyl)-phénothiazine, la N-(2-diméthylaminopropyl)-phénothiazine, le chlorhydrate de N-(2-diméthylaminopropylphénothiazine), la N-octadécylphénothiazine et la N-propylphénothiazine.

3. Procédé selon la revendication 1, **caractérisé en ce que** le monoalkyléther de l'hydroquinone est un monoéther de l'hydroquinone avec des alcools aliphatiques comprenant un à six atomes de carbone, de manière particulièrement préférée le monométhyléther de l'hydroquinone.

4. Procédé selon la revendication 1, **caractérisé en ce que** les dérivés éthérifiés en position terminale d'alkylèneglycol et/ou de polyalkylèneglycol sont des composés de formule I 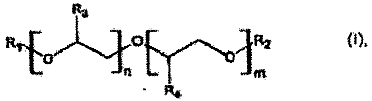 dans laquelle
n et m valent, indépendamment l'un de l'autre, 0-10, n + m ≥ 1,
R₁ et R₂ représentent, indépendamment l'un de l'autre, hydrogène ou un radical C₁-C₆-alkyle linéaire ou ramifié, au moins un des radicaux R₁ et R₂ représentant C₁-C₆-alkyle linéaire ou ramifié et
R₃ et R₄ représentent, indépendamment l'un de l'autre, hydrogène ou méthyle.

5. Procédé selon la revendication 4, **caractérisé en ce que** les composés de formule I sont choisis dans le groupe constitué par l'éthylèneglycolbutyléther,
l'éthylèneglycolmonométhyléther,
l'éthylèneglycolmonoéthyléther,
l'éthylèneglycoldiméthyléther,
l'éthylèneglycoldiéthyléther,
le 1-méthoxy-2-propanol,
le diéthylèneglycolmonoéthyléther,
le diéthylèneglycoldiméthyléther,
le diéthylèneglycoldiéthyléther,
le diéthylèneglycolmonobutyléther,
le diéthylèneglycoldibutyléther,
le diéthylèneglycolmonopropyléther,
le diéthylèneglycolmonohexyléther,
le dipropylèneglycolmonométhyléther,
le dipropylèneglycolmonobutyléther,
le dipropylèneglycolmono-tert-butyléther,
le dipropylèneglycolmonopropyléther,
le triéthylèneglycoldiméthyléther,
le triéthylèneglycolmonoéthyléther,
le tripropylèneglycolmonobutyléther,
le tripropylèneglycolmonométhyléther et/ou
le tripropylèneglycolmonopropyléther.

6. Procédé selon la revendication 5, **caractérisé en ce que** les composés de formule I sont choisis dans le groupe formé par le diéthylèneglycolmonoéthyléther, le diéthylèneglycolmonobutyléther, le diéthylèneglycoldibutyléther, le dipropylèneglycolmono-tert-butyléther, le triéthylèneglycolmonoéthyléther et/ou le tripropylèneglycolmonobutyléther, en particulier dans le groupe formé par le diéthylèneglycolmonoéthyléther et/ou le diéthylèneglycolmonobutyléther.

7. Procédé selon la revendication 1, **caractérisé en ce que** la teneur en inhibiteur de la solution d'inhibiteur, par rapport au poids de la solution d'inhibiteur, est d'au moins 5% en poids.

8. Procédé selon la revendication 1, **caractérisé en ce qu'**il s'agit, pour le système polymérisant par voie radicalaire, essentiellement de monomères de (méth)acryle polymérisant par voie radicalaire.

9. Procédé selon la revendication 8, **caractérisé en ce que** le monomère de (méth)acryle est l'acide (méth)acrylique et/ou un ester de l'acide (méth)acrylique.

10. Solution d'inhibiteur contenant, par rapport à la solution, au moins 15% en poids d'un composé de phénothiazine et/ou d'un monoalkyléther de l'hydroquinone, le solvant de la solution d'inhibiteur contenant, à raison d'au moins 50% de son poids, un dérivé éthérifié en position terminale de polyalkylèneglycol, qui est choisi dans le groupe formé par le diéthylèneglycolmonoéthyléther, le diéthylèneglycolmonobutyléther, le diéthylèneglycoldibutyléther, le dipropylèneglycolmono-tert-butyléther, le triéthylèneglycolmonoéthyléther et/ou le tripropylèneglycolmonobutyléther.

11. Solution d'inhibiteur selon la revendication 10, contenant de la phénothiazine et du diéthylèneglycolmonoéthyléther et/ou du diéthylèneglycolmonobutyléther.

12. Solution d'inhibiteur selon l'une quelconque des revendications 10 ou 11, **caractérisée en ce que**, lors du mélange de la solution d'inhibiteur avec des monomères d'acryle, il ne se produit pas d'enthalpie de mélange marquée.

13. Utilisation de la solution d'inhibiteur contenant un composé de phénothiazine et/ou un monoalkyléther de l'hydroquinone, le solvant de la solution d'inhibiteur étant, à raison d'au moins 50% de son poids, un dérivé éthérifié en position terminale d'alkylèneglycol et/ou de polyalkylèneglycol, pour l'arrêt immédiat de polymérisations par voie radicalaire.
